# EUROPÄISCHE PATENTSCHRIFT

(11) **EP 2 946 904 B1**
(45) Veröffentlichungstag und Bekanntmachung des Hinweises auf die Patenterteilung: **25.10.2017**
(21) Anmeldenummer: 14169506.4
(22) Anmeldetag: 22.05.2014
(51) Int. Cl.: B29C 47/76

(54) **Vorrichtung und Verfahren zur Entgasung von aufzubereitendem Material**
Device and method for degassing material to be processed
Dispositif et procédé de dégazage de matériaux à préparer

(43) Veröffentlichungstag der Anmeldung: 25.11.2015
(73) Patentinhaber: Coperion GmbH, 70469 Stuttgart (DE)
(72) Erfinder: Schmudde, Markus, 71711 Murr (DE)
(74) Vertreter: Rau, Schneck & Hübner Patentanwälte Rechtsanwälte PartGmbB

(56) Entgegenhaltungen:
- EP-A1- 0 938 960
- FR-A- 1 487 541
- GB-A- 1 083 798
- GB-A- 1 413 014
- GB-A- 2 270 029
- US-A- 3 742 093
- DATABASE WPI Week 198551 Thomson Scientific, London, GB; AN 1985-319746 XP002734748, -& JP S60 222223 A (IKEGAI IRON WORKS LTD) 6. November 1985 (1985-11-06)
- DATABASE WPI Week 198527 Thomson Scientific, London, GB; AN 1985-162455 XP002734749, -& JP S60 92824 A (TOSHIBA MACHINE CO LTD) 24. Mai 1985 (1985-05-24)

## Beschreibung

Die Erfindung betrifft eine Vorrichtung zur Entgasung von aufzubereitendem Material, insbesondere Kunststoffmaterial, gemäß dem Oberbegriff des Anspruchs 1. Die Erfindung betrifft ferner ein Verfahren zur Entgasung von aufzubereitendem Material.

Aus der EP 2 193 907 A1 (entspricht US 2010/0143518 A1) ist eine Vorrichtung zur Aufbereitung und Entgasung von Material bekannt. Die Vorrichtung umfasst einen Antriebsmotor, der über ein Getriebe eine Schneckenmaschine drehantreibt. Die Abtriebswellen des Getriebes und die Schneckenwellen der Schneckenmaschine sind mittels Kupplungshülsen miteinander verbunden. Die Kupplungshülsen befinden sich in einem Ansatz-Gehäuse des Getriebes, das auch als Getriebelaterne bezeichnet wird. Die Schneckenmaschine ist mit dem Ansatz-Gehäuse verbunden, wobei in dem Maschinengehäuse eine Entgasungsöffnung bzw. ein Entgasungskanal zur Rückwärtsentgasung des in der Schneckenmaschine befindlichen Materials ausgebildet ist.

Die GB 1 413 014 A offenbart eine Schneckenmaschine mit einem Maschinengehäuse und einer Gehäusebohrung, in der eine Schnecke angeordnet ist. Die Gehäusebohrung ist über einen Ringspalt mit einer Zwischenkammer eines Getriebes verbunden. Durch den Ringspalt tretende Gase werden aus der Zwischenkammer abgesaugt.

Aus der GB 1 083 798 A ist eine Schneckenmaschine mit einem Maschinengehäuse bekannt, in dem Schnecken angeordnet sind. Die Schneckenmaschine bildet einen Entgasungsabschnitt aus, in dem eine Entgasungsöffnung in die Gehäusebohrungen des Maschinengehäuses mündet. Die Wellenverbindung der Schnecken ist in den Gehäusebohrungen im Bereich des Entgasungsabschnitts angeordnet.

Aus der FR 1 487 541 A ist eine Vorrichtung zur Entfeuchtung von Kautschuk bekannt. Die Vorrichtung umfasst eine Schneckenmaschine mit einer Schnecke, die in einem Käfig angeordnet ist. Unterhalb von Auslassöffnungen des Käfigs ist eine Sammelschüssel für die ausgepresste Flüssigkeit angeordnet.

Aus der JP 60222223 A, der EP 0 938 960 A1 und der GB 2 270 029 A sind Schneckenmaschinen bekannt, deren Maschinengehäuse stromaufwärts einer Zuführöffnung eine bodenseitig angeordnete Austrittsöffnung aufweisen.

Aus der JP 60092824 A und der US 3 742 093 A sind Schneckenmaschinen mit Seitenentgasungsmaschinen bekannt.

Der Erfindung liegt die Aufgabe zugrunde, eine einfache und kompakte Vorrichtung zu schaffen, die auf einfache und effiziente Weise die Entgasung von aufzubereitendem Material ermöglicht.

Diese Aufgabe wird durch eine Vorrichtung mit den Merkmalen des Anspruchs 1 gelöst. Dadurch, dass zwischen der mindestens einen Gehäusebohrung der Schneckenmaschine und dem Innenraum des Ansatz-Gehäuses mindestens ein Entgasungskanal ausgebildet ist, kann die Entgasung des Materials über das Ansatz-Gehäuse des Getriebes erfolgen. Hierzu ist in dem Ansatz-Gehäuse mindestens eine Entgasungsöffnung ausgebildet, die in den Innenraum mündet. Flüchtige Bestandteile, die bei der Aufbereitung aus dem Material entweichen, können auf einfache und effiziente Weise aus der mindestens einen Gehäusebohrung über den mindestens einen Entgasungskanal, den Innenraum und die mindestens eine Entgasungsöffnung abgeführt werden. Die Entgasung von flüchtigen Bestandteilen des Materials erfolgt somit über die Getriebelaterne. Die erfindungsgemäße Vorrichtung weist einen in axialer Richtung verkürzten Aufbau auf, da - im Vergleich zu der bekannten Vorrichtung - die Entgasungsöffnung bzw. der Entgasungskanal in dem Maschinengehäuse entfällt. Die erfindungsgemäße Vorrichtung ist somit einfacher und kompakter aufgebaut.

Die mindestens eine Wellenverbindung ist in dem Ansatz-Gehäuse angeordnet, das mit der Schneckenmaschine und mit einem Haupt-Gehäuse des Getriebes verbunden ist. Der mindestens eine Entgasungskanal ist zwischen der mindestens einen Gehäusebohrung und dem Innenraum des Ansatz-Gehäuses ausgebildet. Die mindestens eine Entgasungsöffnung erstreckt sich durch das Ansatz-Gehäuse in den Innenraum, sodass flüchtige Bestandteile des Materials aus der mindestens einen Gehäusebohrung durch den mindestens einen Entgasungskanal, den Innenraum und die mindestens eine Entgasungsöffnung abgeführt werden können. Dadurch, dass das Ansatz-Gehäuse mit dem Haupt-Gehäuse und dem Maschinengehäuse verbunden ist, weist die Vorrichtung in axialer Richtung eine geringe Länge auf. Durch den zumindest bereichsweise schräg verlaufenden Gehäuseboden kann sich Kondensat, das bei der Entgasung in dem Ansatz-Gehäuse anfällt, an einer tiefsten Stelle des Gehäusebodens sammeln.

Die minimale freie Querschnittsfläche des mindestens einen Entgasungskanals ist vorzugsweise mindestens so groß, wie die freie Querschnittsfläche in der mindestens einen Gehäusebohrung, also zwischen der mindestens einen Schneckenwelle und dem Maschinengehäuse. Hierdurch wird gewährleistet, dass sich die Strömungsgeschwindigkeit der flüchtigen Bestandteile beim Entgasen in dem mindestens einen Entgasungskanal nicht bzw. nicht wesentlich erhöht.

Eine Vorrichtung nach Anspruch 2 gewährleistet eine einfache und effiziente Entgasung. Dadurch, dass der mindestens eine Entgasungskanal zumindest teilweise außerhalb des Kerndurchmessers in die mindestens eine Gehäusebohrung mündet, weist der mindestens eine Entgasungskanal aufgrund des freien Strömungsquerschnitts einen geringen Strömungswiderstand auf. Je größer der freie Strömungsquerschnitt des mindestens einen Entgasungskanals ist, der außerhalb des Kerndurchmessers liegt, desto kleiner ist der Strömungswiderstand. Der außerhalb des Kerndurchmessers liegende Strömungsquerschnitt des mindestens einen Entgasungskanals wird von der Schneckenwelle nicht dauerhaft überdeckt, wodurch eine einfache und effiziente Entgasung gewährleistet ist.

Eine Vorrichtung nach Anspruch 3 gewährleistet einen einfachen Aufbau. Durch den Kerndurchmesser und den Außendurchmesser der mindestens einen Schneckenwelle wird an einem antriebsseitigen Ende der mindestens einen Gehäusebohrung ein Mündungsbereich begrenzt, in dem der mindestens eine Entgasungskanal zumindest teilweise in die mindestens eine Gehäusebohrung mündet und den Innenraum mit der mindestens einen Gehäusebohrung verbindet. Hierdurch weist der mindestens eine Entgasungskanal in axialer Richtung eine geringe Länge auf. Durch den Strömungsquerschnitt des mindestens einen Entgasungskanals, der in dem Mündungsbereich liegt, wird der mindestens eine Entgasungskanal nicht dauerhaft von der mindestens einen Schneckenwelle überdeckt, wodurch der mindestens eine Entgasungskanal einen geringen Strömungswiderstand hat. Beispielsweise ist zwischen der mindestens einen Gehäusebohrung und dem Innenraum mindestens eine Durchgangsbohrung für die zugehörige Schneckenwelle ausgebildet, wobei die mindestens eine Durchgangsbohrung einen Durchmesser aufweist, der zwischen dem Kerndurchmesser und dem Außendurchmesser liegt. Hierdurch bildet die mindestens eine Durchgangsbohrung einen ringförmigen Entgasungskanal. Weiterhin kann der mindestens eine Entgasungskanal einen L-förmigen Querschnitt aufweisen, der im Wesentlichen in dem Mündungsbereich liegt. Generell kann der mindestens eine Entgasungskanal eine beliebige Querschnittsform aufweisen.

Eine Vorrichtung nach Anspruch 4 gewährleistet auf einfache und effiziente Weise eine Entgasung.

Eine Vorrichtung nach Anspruch 5 gewährleistet einen einfachen und kompakten Aufbau. Durch die mindestens eine Entgasungsöffnung wird in dem Innenraum ein Montagebereich definiert, der von außerhalb des Ansatz-Gehäuses zugänglich ist. Der Montagebereich entspricht im Wesentlichen der Projektion der mindestens einen Entgasungsöffnung in den Innenraum. Dadurch, dass die mindestens eine Wellenverbindung in dem Montagebereich angeordnet ist, sind zur Montage und/oder Demontage der mindestens einen Wellenverbindung keine weiteren Montageöffnungen erforderlich, da bereits die mindestens eine Entgasungsöffnung eine Montage und/oder Demontage der mindestens einen Wellenverbindung ermöglicht.

Eine Vorrichtung nach Anspruch 6 gewährleistet einen einfachen Aufbau. Im Bereich der tiefsten Stelle des Gehäusebodens ist eine Kondensatabführöffnung ausgebildet, durch die das Kondensat aus dem Innenraum des Ansatz-Gehäuses abgeführt werden kann. Die Kondensatabführöffnung ist verschließbar, beispielsweise durch einen Sammelbehälter, der an dem Ansatz-Gehäuse, insbesondere an dem Gehäuseboden lösbar befestigt ist. Die Kondensatabführöffnung ist vorzugsweise dicht verschließbar, insbesondere vakuumdicht. Gebildetes Kondensat kann entlang des schräg verlaufenden Gehäusebodens zu der Kondensatabführöffnung geführt werden und durch die Kondensatabführöffnung in den Sammelbehälter abfließen. Zum Leeren des Sammelbehälters wird dieser in einfacher Weise vom Ansatz-Gehäuse gelöst und nach der Leerung wieder befestigt.

Eine Vorrichtung nach Anspruch 7 gewährleistet einen einfachen Aufbau. Durch die in dem Ansatz-Gehäuse ausgebildete Kondensatabführöffnung wird in dem Innenraum ein Montagebereich definiert, der von außerhalb des Ansatz-Gehäuses durch die Kondensatabführöffnung zugänglich ist. Der Montagebereich wird im Wesentlichen durch die Projektion der Kondensatabführöffnung in den Innenraum definiert. Dadurch, dass die mindestens eine Wellenverbindung in dem Montagebereich angeordnet ist, sind keine zusätzlichen Montageöffnungen zur Montage und/oder Demontage der mindestens einen Wellenverbindung erforderlich, da bereits die Kondensatabführöffnung eine Montageöffnung zur Montage und/oder Demontage der mindestens einen Wellenverbindung bereitstellt. Vorzugsweise bildet die mindestens eine Entgasungsöffnung zusammen mit der Kondensatabführöffnung einen gemeinsamen Montagebereich, der zur Montage und/oder Demontage der mindestens einen Wellenverbindung von verschiedenen Seiten, also durch die mindestens eine Entgasungsöffnung und die Kondensatabführöffnung, zugänglich ist.

Eine Vorrichtung nach Anspruch 8 gewährleistet eine einfache und effiziente Entgasung. Die Mehrwellen-Schneckenmaschine weist mehrere in dem Maschinengehäuse ausgebildete und einander durchdringende Gehäusebohrungen auf, in denen jeweils eine zugehörige Schneckenwelle drehantreibbar angeordnet ist. Die Schneckenwellen sind insbesondere gleichsinnig drehantreibbar. Vorzugsweise ist die Schneckenmaschine als Zweiwellen-Schneckenmaschine ausgebildet, die gleichsinnig drehantreibbare und einander dicht kämmende Schneckenwellen aufweist.

Eine Vorrichtung nach Anspruch 9 gewährleistet einen kompakten Aufbau. Dadurch, dass der Antriebsmotor und das Getriebe L-förmig zueinander angeordnet sind, weist die Vorrichtung eine vergleichsweise geringe axiale Länge auf. Das Getriebe ist insbesondere als Winkelgetriebe ausgebildet, sodass der Antriebsmotor in einer ersten axialen Richtung angeordnet ist und das Getriebe zusammen mit der Schneckenmaschine in einer zweiten axialen Richtung angeordnet ist, wobei die axialen Richtungen senkrecht zueinander verlaufen. Vorzugsweise ist der Antriebsmotor derart angeordnet, dass die erste axiale Richtung vertikal und die zweite axiale Richtung horizontal verläuft. Bevorzugt ist der Antriebsmotor hängend angeordnet.

Eine Vorrichtung nach Anspruch 10 gewährleistet eine einfache und effiziente Entgasung. Die Schneckenmaschine ist als Seitenentgasungsmaschine ausgebildet, die zur Entgasung des in der Haupt-Schneckenmaschine befindlichen Materials dient. Die Haupt-Schneckenmaschine dient zur Aufbereitung des Materials und weist in üblicher Weise ein Haupt-Maschinengehäuse mit darin ausgebildeten Haupt-Gehäusebohrungen auf, in denen Behandlungselementwellen gleichsinnig drehantreibbar angeordnet sind. Das Haupt-Maschinengehäuse weist mindestens eine Durchgangsbohrung auf, die in die Haupt-Gehäusebohrungen mündet und die Haupt-Gehäusebohrungen mit der mindestens einen Gehäusebohrung der als Seitenentgasungsmaschine dienenden Schneckenmaschine verbindet. Flüchtige Bestandteile, die während der Aufbereitung aus dem Material entweichen, werden aus den Haupt-Gehäusebohrungen durch die mindestens eine Durchgangsbohrung in die mindestens eine Gehäusebohrung abgeführt. Von dort werden die flüchtigen Bestandteile erfindungsgemäß durch den mindestens einen Entgasungskanal, den Innenraum und die mindestens eine Entgasungsöffnung aus dem Ansatz-Gehäuse abgeführt.

Eine Vorrichtung nach Anspruch 11 gewährleistet einen einfachen und kompakten Aufbau. Die Schneckenmaschine dient zur Aufbereitung und zur Entgasung des Materials. Hierzu ist in dem Maschinengehäuse eine Zuführöffnung für das aufzubereitende Material und eine Austragsöffnung zum Austragen des aufbereiteten Materials ausgebildet.

Der Erfindung liegt ferner die Aufgabe zugrunde, ein Verfahren zu schaffen, das auf einfache und effiziente Weise eine Entgasung von aufzubereitendem Material mit einer einfach und kompakt aufgebauten Vorrichtung ermöglicht.

Diese Aufgabe wird durch ein Verfahren mit den Merkmalen des Anspruchs 12 gelöst. Die Vorteile des erfindungsgemäßen Verfahrens entsprechen den bereits beschriebenen Vorteilen der erfindungsgemäßen Vorrichtung.

Weitere Merkmale, Vorteile und Einzelheiten der Erfindung ergeben sich aus der nachfolgenden Beschreibung mehrerer Ausführungsbeispiele. Es zeigen:
- Fig. 1: eine Seitenansicht einer Vorrichtung zur Entgasung von aufzubereitendem Material gemäß einem ersten Ausführungsbeispiel,
- Fig. 2: einen vertikalen Teillängsschnitt durch die Vorrichtung nach Fig. 1 in einem Übergangsbereich von einer Schneckenmaschine zu einem Getriebe,
- Fig. 3: einen Querschnitt durch die Vorrichtung entlang der Schnittlinie III-III in Fig. 2,
- Fig. 4: einen Querschnitt entsprechend dem Querschnitt in Fig. 3 durch eine Vorrichtung zur Entgasung von aufzubereitendem Material gemäß einem zweiten Ausführungsbeispiel,
- Fig. 5: eine teilweise geschnittene Draufsicht auf eine Vorrichtung zur Entgasung von aufzubereitendem Material gemäß einem dritten Ausführungsbeispiel, und
- Fig. 6: einen Querschnitt durch die Vorrichtung entlang der Schnittlinie VI-VI in Fig. 5.

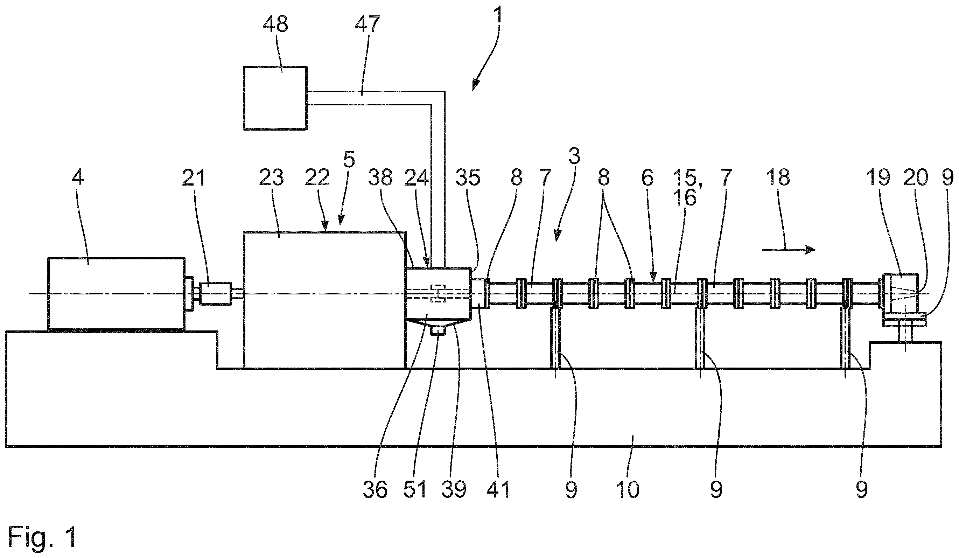

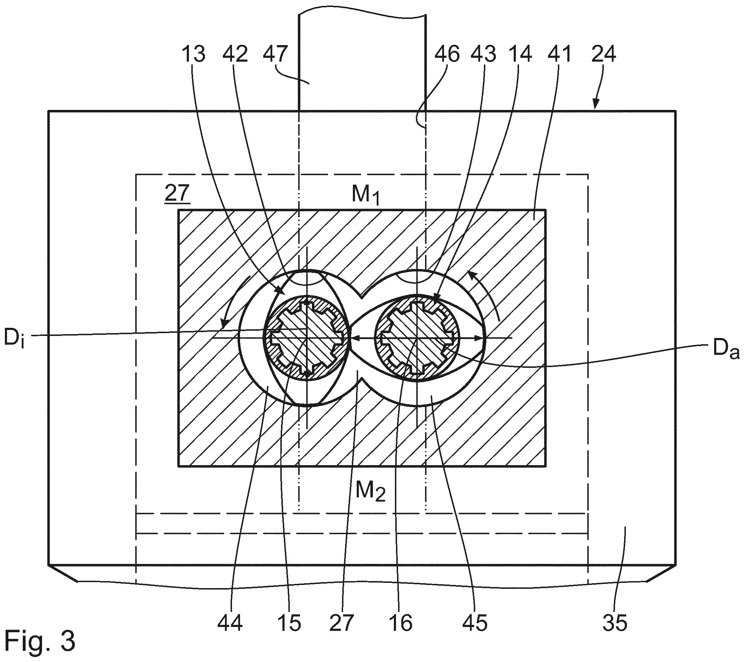

Nachfolgend ist anhand der Figuren 1 bis 3 ein erstes Ausführungsbeispiel der Erfindung beschrieben. Eine Vorrichtung 1 zur Aufbereitung und Entgasung von Material 2, insbesondere Kunststoffmaterial, weist eine Mehrwellen-Schneckenmaschine 3 auf, die von einem Antriebsmotor 4 über ein Getriebe 5 drehantreibbar ist.

Die Schneckenmaschine 3 weist ein Maschinengehäuse 6 auf, das aus mehreren Gehäuseabschnitten 7 zusammengesetzt ist, die mittels Flanschen 8 miteinander verbunden sind. Das Maschinengehäuse 6 ist mittels Stützen 9 gegenüber einem Untergestell 10 abgestützt.

Die Schneckenmaschine 3 ist als Zweiwellen-Schneckenmaschine bzw. Zweiwellen-Extruder ausgebildet. Das Maschinengehäuse 6 weist zwei einander durchdringende Gehäusebohrungen 11, 12 auf, die im Querschnitt die Form einer liegenden Acht haben. In den Gehäusebohrungen 11, 12 sind zwei Schneckenwellen 13, 14 angeordnet, die dicht kämmend ausgebildet sind und um zugehörige Drehachsen 15, 16 drehantreibbar sind. Die Schneckenwellen 13, 14 weisen einen Kerndurchmesser Dᵢ und einen Außendurchmesser Dₐ auf. Im ersten Gehäuseabschnitt 7 ist eine Zuführöffnung 17 für das Material 2 ausgebildet, das mittels der Schneckenwellen 13, 14 in einer Förderrichtung 18 transportiert und aufbereitet wird. Das aufbereitete Material 2 wird durch eine in einer Düsenplatte 19 ausgebildete Austragsöffnung 20 ausgetragen. Die Düsenplatte 19 ist endseitig an dem letzten Gehäuseabschnitt 7 befestigt.

Das Getriebe 5 ist als Untersetzungs- und Verzweigungs-Getriebe ausgebildet. Das Getriebe 5 ist antriebsseitig mit dem Antriebsmotor 4 gekoppelt, wobei zwischen dem Antriebsmotor 4 und dem Getriebe 5 eine Kupplung 21 angeordnet ist. Das Getriebe 5 weist ein Gehäuse 22 auf, das durch ein Haupt-Gehäuse 23 und ein Ansatz-Gehäuse 24 gebildet ist. Das Ansatz-Gehäuse 24 wird auch als Getriebelaterne bezeichnet. Das Ansatz-Gehäuse 24 ist an dem Haupt-Gehäuse 23 befestigt und begrenzt einen Innenraum 27. In dem Innenraum 27 sind Wellenverbindungen 28, 29 zwischen zwei Abriebswellen 25, 26 des Getriebes 5 und den Schneckenwellen 13, 14 angeordnet. Hierzu sind die Abtriebswellen 25, 26 des Getriebes 5 aus dem Haupt-Gehäuse 23 in den Innenraum 27 geführt und dort mittels Kupplungshülsen 30, 31 mit Antriebszapfen 32, 33 der Schneckenwellen 13, 14 verbunden.

Der Innenraum 27 des Ansatz-Gehäuses 24 wird durch eine antriebsseitige Stirnwand 34, eine abtriebsseitige Stirnwand 35, Seitenwände 36 und 37, eine obere Wand 38 und eine untere Wand 39 begrenzt. In der Stirnwand 35 ist eine Lagerausnehmung 40 ausgebildet, in der das Maschinengehäuse 6 mittels eines Adapters 41 gelagert ist. Der Adapter 41 ist Teil des Maschinengehäuses 6 und an dem ersten Gehäuseabschnitt 7 befestigt. In dem Adapter 41 sind Bohrungen 42, 43 für die Schneckenwellen 13, 14 ausgebildet, die im Querschnitt mit den Gehäusebohrungen 11, 12 fluchten. Die Bohrungen 42 ,43 durchsetzen den Adapter 41 in axialer Richtung. Die Bohrungen 42, 43 sind also als Durchgangsbohrungen ausgebildet und bilden jeweils einen ringförmigen Entgasungskanal 44, 45. Die Entgasungskanäle 44, 45 überdecken einander und haben gemeinsam im Querschnitt die Form einer liegenden Acht. Die Entgasungskanäle 44, 45 erstrecken sich von den Gehäusebohrungen 11, 12 zu dem Innenraum 27. In der oberen Wand 38 ist eine Entgasungsöffnung 46 ausgebildet, die über eine Saugleitung 47 mit einer Saugeinrichtung 48 verbunden ist. Die Entgasungskanäle 44, 45 münden somit im Wesentlichen zwischen dem jeweiligen Kerndurchmesser Dᵢ und dem jeweiligen Außendurchmesser Dₐ in die Gehäusebohrungen 11, 12.

Die Abtriebswellen 25, 26 münden durch die Stirnwand 34 in den Innenraum 27. Die Stirnwand 34 ist gegenüber den Abtriebswellen 25, 26 abgedichtet, beispielsweise durch nicht näher dargestellte Dichtungen. Die Stirnwände 34 und 35, die Seitenwände 36 und 37 sowie die Wände 38 und 39 sind dicht miteinander verbunden, so dass das Ansatz-Gehäuse 24 den Innenraum 27 zum Zwecke der Entgasung abdichtet. Die untere Wand 39 bildet einen schräg verlaufenden Gehäuseboden 49 aus, sodass in dem Innenraum 27 anfallendes Kondensat entlang des Gehäusebodens 49 zu einer Kondensatabführöffnung 50 läuft, die in der unteren Wand 39 ausgebildet ist. An die Kondensatabführöffnung 50 ist ein Sammelbehälter 51 angeschlossen, indem der Sammelbehälter 51 lösbar und dicht an der unteren Wand 39 befestigt ist. Die Kondensatabführöffnung 50 ist mittels des Sammelbehälters 51 dicht verschließbar.

Durch die Entgasungsöffnung 46 ist der Innenraum 27 von außerhalb des Ansatz-Gehäuses 24 zugänglich, sodass durch die Entgasungsöffnung 46 in dem Innenraum 27 ein erster Montagebereich M₁ definiert wird. Der erste Montagebereich M₁ wird im Wesentlichen durch die Projektion der Entgasungsöffnung 46 in den Innenraum 27 definiert. Entsprechend ist der Innenraum 27 durch die Kondensatabführöffnung 50 von außerhalb des Ansatz-Gehäuses 24 zugänglich, sodass die Kondensatabführöffnung 50 einen zweiten Montagebereich M₂ definiert. Der zweite Montagebereich M₂ wird im Wesentlichen durch die Projektion der Kondensatabführöffnung 50 in den Innenraum 27 definiert. Die Wellenverbindungen 28, 29 sind zumindest teilweise in einem der Montagebereiche M₁ und/oder M₂ angeordnet.

Die Funktionsweise der Vorrichtung 1 ist wie folgt:
Der Antriebsmotor 4 treibt über das Getriebe 5 die Schneckenwellen 13, 14 gleichsinnig, also in gleichen Drehrichtungen an. Durch die Zuführöffnung 17 wird in die Gehäusebohrungen 11, 12 aufzubereitendes Material 2, beispielsweise Kunststoffmaterial zugeführt. Das Material 2 wird mittels der Schneckenwellen 13, 14 in der Förderrichtung 18 transportiert und behandelt, wobei flüchtige Bestandteile aus dem Material 2 austreten. Das aufbereitete Material 2 wird in üblicher Weise durch die Austragsöffnung 20 ausgetragen.

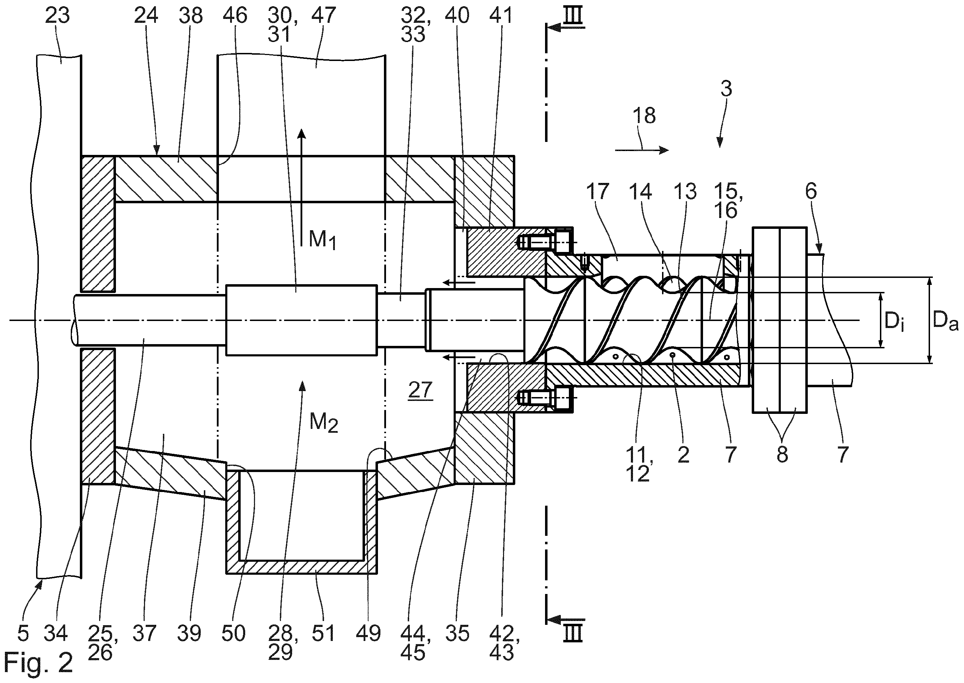

Die flüchtigen Bestandteile werden rückwärts, also entgegen der Förderrichtung 18 aus den Gehäusebohrungen 11, 12 abgeführt. Hierzu wird mittels der Saugeinrichtung 48 über die Saugleitung 47 in dem Innenraum 27 ein Unterdruck erzeugt, sodass die flüchtigen Bestandteile durch die Entgasungskanäle 44, 45 in den Innenraum 27 und von dort durch die Entgasungsöffnung 46 und die Saugleitung 47 zu der Saugeinrichtung 48 abgesaugt werden. Dies ist durch Pfeile in Fig. 2 veranschaulicht. Das Entgasen der flüchtigen Bestandteile erfolgt somit rückwärts über die Getriebelaterne. Das beim Absaugen in dem Innenraum 27 auftretende Kondensat läuft über den Gehäuseboden 49 in Richtung der Kondensatabführöffnung 50 und sammelt sich in dem Sammelbehälter 51. Der Sammelbehälter 51 wird bei Bedarf von der unteren Wand 39 gelöst und entleert.

Dadurch, dass die Entgasungskanäle 44, 45 im Bereich zwischen dem Kerndurchmesser Dᵢ und dem Außendurchmesser Dₐ in die Gehäusebohrungen 11, 12 münden, weisen die Entgasungskanäle 44, 45 eine kurze axiale Länge und einen vergleichsweise großen Strömungsquerschnitt auf. Der Strömungsquerschnitt ist durch die Schneckenwellen 13, 14 nicht dauerhaft verdeckt, sondern im Wesentlichen frei. Dadurch, dass die Entgasung über das Ansatz-Gehäuse 24 erfolgt, kann die axiale Länge der Schneckenmaschine 3 verkürzt werden. Insbesondere ist in dem Maschinengehäuse 6 eine Ausbildung einer Entgasungsöffnung nicht mehr erforderlich. Dadurch, dass die Wellenverbindungen 28, 29 in den Montagebereichen M₁ und M₂ angeordnet sind, können die Wellenverbindungen 28, 29 durch die Entgasungsöffnung 46 und/oder die Kondensatabführöffnung 50 montiert und/oder demontiert werden. Durch die Entgasungskanäle 44, 45 und die in dem Ansatz-Gehäuse 24 ausgebildete Entgasungsöffnung 46 wird eine einfache, effiziente und baulich kompakte Rückwärtsentgasung ausgebildet.

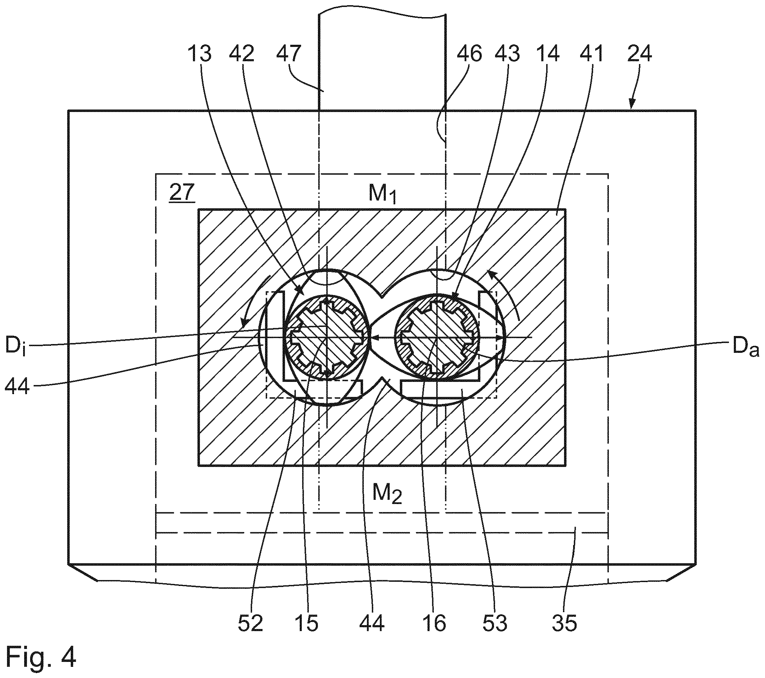

Nachfolgend ist anhand von Fig. 4 ein zweites Ausführungsbeispiel der Erfindung beschrieben. Im Unterschied zu dem vorangegangenen Ausführungsbeispiel weist der Adapter 41 keine durchgehenden Bohrungen 42, 43 auf. Die Bohrungen 42, 43 sind sacklochartig ausgebildet. Ausgehend von den Bohrungen 42, 43 erstrecken sich zwei im Querschnitt L-förmige Durchbrechungen 52, 53 in den Innenraum 27. Die Bohrungen 42 ,43 und die daran anschließenden Durchbrechungen 52, 53 bilden somit die Entgasungskanäle 44, 45. Die Schneckenwellen 13, 14 sind in dem Adapter 41 stromaufwärts zu den Bohrungen 42, 43 durch nicht näher dargestellte Dichtungen, insbesondere durch Stopfbuchs-Packungen in üblicher Weise abgedichtet. Die L-förmigen Durchbrechungen 52, 53 weisen jeweils einen horizontal verlaufenden unteren Schenkel auf, durch den Kondensat in Richtung des Ansatz-Gehäuses 24 aus den Gehäusebohrungen 13, 14 abfließen kann. Hierzu sind die L-förmigen Durchbrechungen 52, 53 vorzugsweise in Richtung des Ansatz-Gehäuses 24 schräg nach unten verlaufend ausgebildet. Die vertikal verlaufenden Schenkel der Durchbrechungen 52, 53 vergrößern den Strömungsquerschnitt der Entgasungskanäle 44, 45. Hinsichtlich des weiteren Aufbaus und der weiteren Funktionsweise wird auf das vorangegangene Ausführungsbeispiel verwiesen.

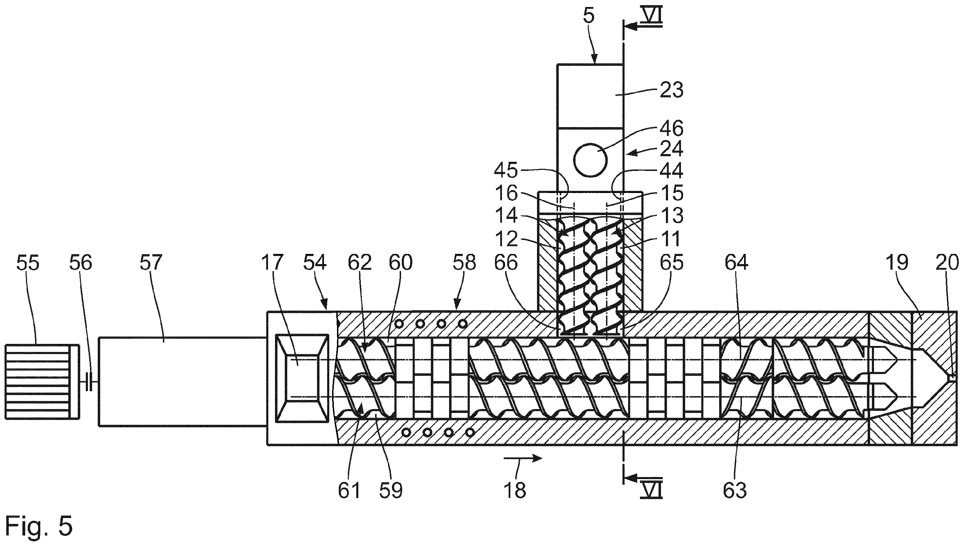

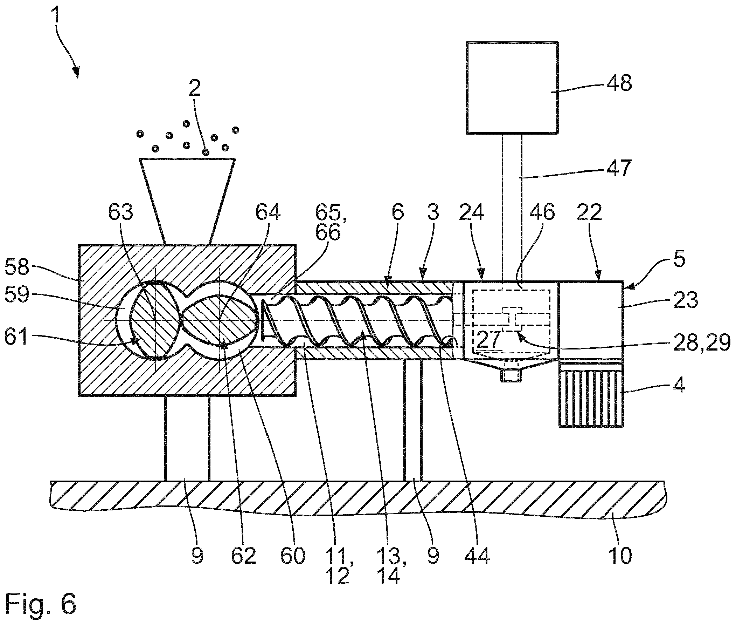

Nachfolgend ist anhand der Figuren 5 und 6 ein drittes Ausführungsbeispiel der Erfindung beschrieben. Im Unterschied zu den vorangegangenen Ausführungsbeispielen ist die Schneckenmaschine 3 als Seitenentgasungsmaschine ausgebildet. Die Vorrichtung 1 weist zur Aufbereitung des Materials 2 eine Haupt-Schneckenmaschine 54 auf, die durch einen HauptAntriebsmotor 55 über eine Kupplung 56 und ein Getriebe 57 gleichsinnig drehantreibbar ist. Die Haupt-Schneckenmaschine 54 weist ein Haupt-Maschinengehäuse 58 auf, in dem zwei einander durchdringende Haupt-Gehäusebohrungen 59, 60 sowie die Zuführöffnung 17 und die Austragsöffnung 20 ausgebildet sind. In den Haupt-Gehäusebohrungen 59, 60 sind Schneckenwellen bzw. Behandlungselementwellen 61, 62 angeordnet und mittels des Haupt-Antriebsmotors 55 gleichsinnig, also in gleichen Drehrichtungen um zugehörige Drehachsen 63, 64 drehantreibbar. Die Schneckenmaschine 3 ist mit ihrem Maschinengehäuse 6 seitlich an dem Haupt-Maschinengehäuse 58 befestigt, wobei die Gehäusebohrungen 11, 12 über Durchgangsbohrungen 65, 66 in die Haupt-Gehäusebohrungen 58, 59 münden. Die Schneckenwellen 13, 14 erstrecken sich bis in die Durchgangsbohrungen 65, 66. Das Maschinengehäuse 6 weist einen Gehäuseabschnitt 7 auf, der direkt mit dem Ansatz-Gehäuse 24 verbunden ist. Ein Adapter ist nicht vorgesehen. Zwischen den Gehäusebohrungen 11, 12 und dem Innenraum 27 erstrecken sich die Entgasungskanäle 44, 45. Hinsichtlich der Ausbildung der Entgasungskanäle 44, 45 wird auf die vorangegangenen Ausführungsbeispiele verwiesen. Der Antriebsmotor 4 und das Getriebe 5 sind zur Erzielung eines kompakteren Aufbaus L-förmig zueinander angeordnet. Hierzu ist das Getriebe 5 als Winkelgetriebe ausgebildet, an dem der Antriebsmotor 4 hängend angeordnet ist. Die Aufbereitung des Materials 2 erfolgt in üblicher Weise mit der Haupt-Schneckenmaschine 54. Die Schneckenmaschine 3 dient zur Entgasung des Materials 2. Hierzu werden flüchtige Bestandteile, die bei der Aufbereitung aus dem Material 2 ausgetreten sind, aus den Haupt-Gehäusebohrungen 59, 60 über die Durchgangsbohrungen 65, 66, die Gehäusebohrungen 11, 12, die Entgasungskanäle 44, 45, den Innenraum 27 und die Entgasungsöffnung 46 abgesaugt. Die Schneckenwellen 13, 14 werden derart gleichsinnig mittels des Antriebsmotors 4 drehangetrieben, dass das Material 2 nicht in die Durchgangsbohrungen 65, 66 und die Gehäusebohrungen 11, 12 eintreten kann. Hinsichtlich des weiteren Aufbaus und der weiteren Funktionsweise wird auf die vorangegangenen Ausführungsbeispiele verwiesen.

Die Entgasungsöffnung 46 und die zugehörige Saugleitung 47 können prinzipiell an einer beliebigen Wand des Ansatz-Gehäuses 24 angeordnet sein. Darüber hinaus kann der mindestens eine Entgasungskanal 44, 45 zwischen der mindestens einen Gehäusebohrung 11, 12 und dem Innenraum 27 prinzipiell einen beliebigen Verlauf und/oder eine beliebige Querschnittsform haben. Die minimale freie Querschnittsfläche des mindestens einen Entgasungskanals 44, 45 ist vorzugsweise mindestens so groß, wie die freie Querschnittsfläche in der mindestens einen Gehäusebohrung 11, 12, also zwischen der mindestens einen Schneckenwelle 13, 14 und dem Maschinengehäuse 6.

## Patentansprüche

1. Vorrichtung zur Entgasung von aufzubereitendem Material, insbesondere Kunststoffmaterial, umfassend
- einen Antriebsmotor (4) zum Drehantreiben einer Schneckenmaschine (3),
- eine Schneckenmaschine (3) mit
-- einem Maschinengehäuse (6),
-- mindestens einer in dem Maschinengehäuse (6) ausgebildeten Gehäusebohrung (11, 12),
-- mindestens einer Schneckenwelle (13, 14), die in der zugehörigen Gehäusebohrung (11, 12) angeordnet und um eine zugehörige Drehachse (15, 16) drehantreibbar ist, und
- ein Getriebe (5),
-- das antriebsseitig mit dem Antriebsmotor (4) gekoppelt ist und abtriebsseitig mindestens eine Abtriebswelle (25, 26) aufweist,
-- das ein Gehäuse (24) mit einem Innenraum (27) aufweist,
-- wobei zwischen der mindestens einen Gehäusebohrung (11, 12) und dem Innenraum (27) mindestens ein Entgasungskanal (44, 45) ausgebildet ist, und
-- wobei in dem Gehäuse (24) mindestens eine mit dem Innenraum (27) verbundene Entgasungsöffnung (46) ausgebildet ist,
**dadurch gekennzeichnet,**
**dass** das Gehäuse als Ansatz-Gehäuse (24) ausgebildet ist,
**dass** das Ansatz-Gehäuse (24) mit einem Haupt-Gehäuse (23) des Getriebes (5) und dem Maschinengehäuse (6) verbunden ist,
**dass** das Ansatz-Gehäuse (24) den Innenraum (27) begrenzt und die mindestens eine Entgasungsöffnung (46) in dem Ansatz-Gehäuse (24) ausgebildet ist,
**dass** in dem Ansatz-Gehäuse (24) mindestens eine Wellenverbindung (28, 29) der mindestens einen Abtriebswelle (25, 26) und der mindestens einen Schneckenwelle (13, 14) angeordnet ist, und
**dass** das Ansatz-Gehäuse (24) einen zumindest bereichsweise schräg verlaufenden Gehäuseboden (49) aufweist.

2. Vorrichtung nach Anspruch 1, **dadurch gekennzeichnet,**
**dass** die mindestens eine Schneckenwelle (13, 14) einen Kerndurchmesser (Dᵢ) aufweist,
**dass** der mindestens eine Entgasungskanal (44, 45) zumindest teilweise außerhalb des Kerndurchmessers (Dᵢ) in die mindestens eine Gehäusebohrung (11, 12) mündet.

3. Vorrichtung nach Anspruch 1 oder 2, **dadurch gekennzeichnet, dass** die mindestens eine Schneckenwelle (13, 14) einen Kerndurchmesser (Dᵢ) und einen Außendurchmesser (Dₐ) aufweist,
**dass** der mindestens eine Entgasungskanal (44, 45) zumindest teilweise zwischen dem Kerndurchmesser (Dᵢ) und dem Außendurchmesser (Dₐ) in die mindestens eine Gehäusebohrung (11, 12) mündet.

4. Vorrichtung nach einem der Ansprüche 1 bis 3, **dadurch gekennzeichnet,**
**dass** an die mindestens eine Entgasungsöffnung (46) eine Saugeinrichtung (48) angeschlossen ist.

5. Vorrichtung nach einem der Ansprüche 1 bis 4, **dadurch gekennzeichnet,**
**dass** die mindestens eine Entgasungsöffnung (46) einen Montagebereich (M₁) in dem Innenraum (27) definiert und die mindestens eine Wellenverbindung (28, 29) zumindest teilweise in dem Montagebereich (M₁) angeordnet ist.

6. Vorrichtung nach einem der Ansprüche 1 bis 5, **dadurch gekennzeichnet,**
**dass** der Gehäuseboden (49) zu einer verschließbaren Kondensatabführöffnung (50) verläuft.

7. Vorrichtung nach einem der Ansprüche 1 bis 6, **dadurch gekennzeichnet,**
**dass** in dem Ansatz-Gehäuse (24) eine Kondensatabführöffnung (50) ausgebildet ist,
**dass** die Kondensatabführöffnung (50) einen Montagebereich (M₂) in dem Innenraum (27) definiert und die mindestens eine Wellenverbindung (28, 29) zumindest teilweise in dem Montagebereich (M₂) angeordnet ist.

8. Vorrichtung nach einem der Ansprüche 1 bis 7, **dadurch gekennzeichnet,**
**dass** die Schneckenmaschine (3) als Mehrwellen-Schneckenmaschine, insbesondere als gleichsinnig drehantreibbare Zweiwellen-Schneckenmaschine ausgebildet ist.

9. Vorrichtung nach einem der Ansprüche 1 bis 8, **dadurch gekennzeichnet,**
**dass** der Antriebsmotor (4) und das Getriebe (5) L-förmig zueinander angeordnet sind.

10. Vorrichtung nach einem der Ansprüche 1 bis 9, **dadurch gekennzeichnet,**
**dass** zur Aufbereitung des Materials (2) eine Haupt-Schneckenmaschine (54) vorgesehen ist, und
**dass** die Schneckenmaschine (3) zur Entgasung des in der Haupt-Schneckenmaschine (54) befindlichen Materials (2) an dieser angeschlossen ist.

11. Vorrichtung nach einem der Ansprüche 1 bis 9, **dadurch gekennzeichnet,**
**dass** in dem Maschinengehäuse (6) eine Zuführöffnung (17) für das aufzubereitende Material (2) und in einer Förderrichtung (18) des Materials (2) stromabwärts eine Austragsöffnung (20) für das aufbereitete Material (2) ausgebildet ist.

12. Verfahren zur Entgasung von aufzubereitendem Material, insbesondere Kunststoffmaterial, mit den Schritten:
- Bereitstellen einer Vorrichtung (1) zur Entgasung des Materials (2) nach einem der Ansprüche 1 bis 11,
- Entgasen des Materials (2) durch Abführen von flüchtigen Bestandteilen des Materials (2) aus der mindestens einen Gehäusebohrung (11, 12) durch den mindestens einen Entgasungskanal (44, 45) und die mindestens eine Entgasungsöffnung (46).

## Claims

1. Device for the devolatilization of material to be processed, in particular plastic material, the device comprising
- a drive motor (4) for rotatably driving a screw machine (3),
- a screw machine (3) comprising
-- a machine housing (6),
-- at least one housing bore (11, 12) formed in the machine housing (6),
-- at least one screw shaft (13, 14) arranged in the associated housing bore (11, 12) so as to be rotatably drivable about an associated axis of rotation (15, 16), and
- a gear (5)
-- which is coupled, at a driving end, with the drive motor (4) and has at least one output shaft (25, 26) at an output end,
-- which has a housing (24) with an inner space (27),
-- wherein at least one gas venting channel (44, 45) is formed between the at least one housing bore (11, 12) and the inner space (27), and
-- wherein at least one gas venting opening (46) connected to the inner space (27) is formed in the housing (24),
**characterised in**
**that** the housing is configured as an attachment housing (24),
**that** the attachment housing (24) is connected to a main housing (23) of the gear (5) and the machine housing (6),
**that** the attachment housing (24) defines the inner space (27) and the at least one gas venting opening (46) is formed in the attachment housing (24),
**that** in the attachment housing, at least one shaft connection (28, 29) of the at least one output shaft (25, 26) and the at least one screw shaft (13, 14) is arranged, and
**that** the attachment housing (24) has a housing bottom (49) extending in an oblique direction at least partly.

2. Device according to claim 1, **characterized in that** the at least one screw shaft (13, 14) has a core diameter (Dᵢ), **that** the at least one gas venting channel (44, 45) leads into the at least one housing bore (11, 12) outside the core diameter (Dᵢ) at least partly.

3. Device according to claim 1 or 2, **characterized in that** the at least one screw shaft (13, 14) has a core diameter (Dᵢ) and an outer diameter (Dₐ),
**that** the at least one gas venting channel (44, 45) leads into the at least one housing bore (11, 12) between the core diameter (Dᵢ) and the outer diameter (Dₐ) at least partly.

4. Device according to any one of claims 1 to 3, **characterized in that** a suction device (48) is connected to the at least one gas venting opening (46).

5. Device according to any one of claims 1 to 4, **characterized in that** the at least one gas venting opening (46) defines a mounting region (M₁) in the inner space (27), and the at least one shaft connection (28, 29) is arranged in the mounting region (M₁) at least partly.

6. Device according to any one of claims 1 to 5, **characterized in that** the housing bottom (49) extends in the direction of a sealable condensate drain (50).

7. Device according to any one of claims 1 to 6, **characterized in that** a condensate drain (50) is formed in the attachment housing (24), **that** the condensate drain (50) defines a mounting region (M₂) in the inner space (27) and the at least one shaft connection (28, 29) is arranged in the mounting region (M₂) at least partly.

8. Device according to any one of claims 1 to 7, **characterized in that** the screw machine (3) is configured as a multi-shaft screw machine, in particular a twin-shaft screw machine drivable for rotation in the same direction.

9. Device according to any one of claims 1 to 8, **characterized in that** the drive motor (4) and the gear (5) are arranged in an L-shaped configuration relative to each other.

10. Device according to any one of claims 1 to 9, **characterized in that** a main screw machine (54) is provided for processing the material (2), and
**that** the screw machine (3) is connected thereto for devolatilization of the material (2) located in the main screw machine (54).

11. Device according to any one of claims 1 to 9, **characterized in that** a feed opening (17) for the material (2) to be processed and a discharge opening (20) for the processed material (2) are formed in the machine housing (6), the discharge opening (20) being arranged downstream of the feed opening (17) in a direction of conveyance (18) of the material (2).

12. Method for the devolatilization of material to be processed, in particular plastic material, the method comprising the steps of:
- providing a device (1) for the devolatilization of the material (2) according to any one of claims 1 to 11,
- devolatilizing the material (2) by discharging volatile components of the material (2) from the at least one housing bore (11, 12) via the at least one gas venting channel (44, 45) and the at least one gas venting opening (46).

## Revendications

1. Dispositif de dégazage d'une matière à préparer, en particulier une matière plastique, comprenant
- un moteur d'entraînement (4) pour l'entraînement en rotation d'une machine à vis sans fin (3),
- une machine à vis sans fin (3) pourvue
-- d'un logement de machine (6),
-- d'au moins un trou de logement (11, 12) ménagé dans le logement de machine (6),
-- d'au moins un arbre de vis sans fin (13, 14), qui est agencé dans le trou de logement (11, 12) associé et qui peut être entraîné en rotation autour d'un axe de rotation (15, 16) associé, et
- une transmission (5),
-- qui est accouplée côté entraînement au moteur d'entraînement (4) et qui comprend côté sortie au moins un arbre de sortie (25, 26),
-- qui comprend un carter (24) pourvu d'un espace intérieur (27),
-- au moins un canal de dégazage (44, 45) étant formé entre le ou les trous de logement (11, 12) et l'espace intérieur (27), et
-- au moins une ouverture de dégazage (46) reliée à l'espace intérieur (27) étant ménagée dans le carter (24),
**caractérisé**
**en ce que** le carter est réalisé sous la forme d'un carter rapporté (24),
**en ce que** le carter rapporté (24) est relié au carter principal (23) de la transmission (5) et au logement de machine (6),
**en ce que** le carter rapporté (24) délimite l'espace intérieur (27) et l'ouverture ou les ouvertures de dégazage (46) sont ménagées dans le carter rapporté (24),
**en ce qu'**au moins un raccordement d'arbres (28, 29) de l'arbre ou des arbres de sortie (25, 26) et de l'arbre ou des arbres de vis sans fin (13, 14) est agencé dans le carter rapporté (24), et
**en ce que** le carter rapporté (24) comprend un fond de carter (49) s'étendant en biais au moins par endroits.

2. Dispositif selon la revendication 1, **caractérisé**
**en ce que** l'arbre ou les arbres de vis sans fin (13, 14) présentent un diamètre intérieur (Dᵢ),
**en ce que** le canal ou les canaux de dégazage (44, 45) débouchent au moins en partie à l'extérieur du diamètre intérieur (Dᵢ) dans le ou les trous de logement (11, 12).

3. Dispositif selon la revendication 1 ou 2, **caractérisé**
**en ce que** l'arbre ou les arbres de vis sans fin (13, 14) présentent un diamètre intérieur (Dᵢ) et un diamètre extérieur (Dₐ),
**en ce que** le canal ou les canaux de dégazage (44, 45) débouchent au moins en partie entre le diamètre intérieur (Dᵢ) et le diamètre extérieur (Dₐ) dans le ou les trous de logement (11, 12).

4. Dispositif selon l'une quelconque des revendications 1 à 3, **caractérisé en ce que**
un système d'aspiration (48) est raccordé à l'ouverture ou aux ouvertures de dégazage (46).

5. Dispositif selon l'une quelconque des revendications 1 à 4, **caractérisé**
**en ce que** l'ouverture ou les ouvertures de dégazage (46) définissent une zone de montage (M₁) dans l'espace intérieur (27) et le ou les raccordements d'arbre (28, 29) sont agencés au moins en partie dans la zone de montage (M₁).

6. Dispositif selon l'une quelconque des revendications 1 à 5, **caractérisé**
**en ce que** le fond de logement (49) s'étend en direction d'une ouverture d'évacuation de condensat (50) pouvant être fermée.

7. Dispositif selon l'une quelconque des revendications 1 à 6, **caractérisé**
**en ce qu'**une ouverture d'évacuation de condensat (50) est ménagée dans le carter rapporté (24),
**en ce que** l'ouverture d'évacuation de condensat (50) définit une zone de montage (M₂) dans l'espace intérieur (27) et le ou les raccordements d'arbre (28, 29) sont agencés au moins en partie dans la zone de montage (M₂).

8. Dispositif selon l'une quelconque des revendications 1 à 7, **caractérisé**
**en ce que** la machine à vis sans fin (3) est réalisée sous la forme d'une machine à vis sans fin à plusieurs arbres, en particulier sous la forme d'une machine à vis sans fin à deux arbres pouvant être entraînés dans le même sens.

9. Dispositif selon l'une quelconque des revendications 1 à 8, **caractérisé**
**en ce que** le moteur d'entraînement (4) et la transmission (5) sont agencés en forme de L l'un par rapport à l'autre.

10. Dispositif selon l'une quelconque des revendications 1 à 9, **caractérisé**
**en ce qu'**une machine à vis sans fin principale (54) est prévue pour préparer la matière (2), et
**en ce que** la machine à vis sans fin (3) servant au dégazage de la matière (2) située dans la machine à vis sans fin principale (54) est raccordée à celle-ci.

11. Dispositif selon l'une quelconque des revendications 1 à 9, **caractérisé**
**en ce qu'**une ouverture d'alimentation (17) pour la matière (2) à préparer est ménagée dans le logement de machine (6) et une ouverture de déchargement (20) pour la matière (2) préparée est ménagée dans le logement de machine dans une direction de transport (18) de la matière (2) en aval.

12. Procédé de dégazage d'une matière à préparer, en particulier d'une matière plastique, comprenant les étapes consistant à :
- utiliser un dispositif (1) de dégazage de la matière (2) selon l'une quelconque des revendications 1 à 11,
- dégazer la matière (2) par évacuation des composants volatiles de la matière (2) du ou des trous de logement (11, 12) à travers le canal ou les canaux de dégazage (44, 45) et l'ouverture ou les ouvertures de dégazage (46).
